Europäisches Patentamt

European Patent Office

Office européen des brevets

(11) Veröffentlichungsnummer: **0 001 130**
**B1**

(12) **EUROPÄISCHE PATENTSCHRIFT**

(21) Anmeldenummer: **78200125.9**

(22) Anmeldetag: **01.08.78**

(51) Int. Cl³: **B 60 T 15/24,**
**B 60 T 15/48**

(54) Dreidrucksteuerventil an einer indirekt wirkenden Druckluftbremse

(30) Priorität: **08.09.77 CH 11009/77**

(43) Veröffentlichungstag der Anmeldung:
**21.03.79 Patentblatt 79/06**

(45) Bekanntmachung des Hinweises auf die Patenterteilung:
**23.07.08 Patentblatt 80/15**

(84) Benannte Vertragsstaaten:
**BE DE FR GB SE**

(56) Entgegenhaltungen:
**DE - A - 2 655 895**
**DE - C - 960 363**
**DE - C - 974 765**
**DE - A - 594 521**
**GB - A - 751 070**
**GB - A - 751 935**

(73) Patentinhaber: **Werkzeugmaschinenfabrik**
**Oerlikon-Bührle AG**
**Birchstrasse 155**
**CH - 8050 Zürich (CH)**

(72) Erfinder: **Fasoli, Mario, Comm. Dott. Ing.**
**Via Piccinotti, 89**
**I - 5012 Firenze (IT)**

Courier Press, Leamington Spa, England.

Die Erfindung betrifft ein Dreidrucksteuerventil an einer indirekt wirkenden Druckluftbremse, mit einem Füll- und Abschlus-sorgan, enthaltend einen ersten feder-belasteten Kolben, der einerseits vom Brems-zylinderdruck und andererseits vom Atmos-phärendruck belastet ist, einen zweiten federbelasteten Kolben, der einerseits vom Steuer-behälterdruck und andererseits vom Haupt-luftleitungsdruck belastet ist, eine Kolbenstange, die einerseits am ersten Kolben und andererseits an einem Ventilteller befestigt ist, der zusammen mit einem Ventilsitz am zweiten Kolben ein erstes Ventil zum Füllen des Steuerbehälters bildet, und einen Anschlag an der Kolbenstange zur Uebertragung des Bremszylinderdruckes auf den zweiten Kolben.

Das Füll- und Abschlussorgan soll den folgenden Forderungen möglichst einwandfrei entsprechen.

a) Die Dauer des anfänglichen Auffüllens der Behälter, insbesondere des Hilfsluftbehälters soll klein sein, um beispielsweise einen längeren Aufenthalt zu vermeiden, wenn an einen Zug in einem Durchgangsbahnhof zusätzliche Wagen angehängt werden müssen.

b) Das Dreidrucksteuerventil soll gut gegen das Ueberladen der Behälter durch Füllstösse gesichert sein.

c) Die Füllzeit soll bei langen Zügen in allen Wagen annähernd gleich sein.

d) Die Unerschöpfbarkeit des Bremszylinders und des Steuerbehälters soll gewährleistet sein.

Bei einem bekannten Steuerventil dieser Art (DE - A - 2 655 895) sind diese Forderungen in anderer Weise mit verhältnismässig grossem Aufwand erfüllt. Die vorliegende Erfindung bezweckt die Schaffung eines Steuerventiles, das diese Forderungen mit relativ einfachen Mitteln erfüllt.

Das erfindungsgemässe Steuerventil ist dadurch gekennezeichnet, dass das Füll- und Abschlussorgan mit einem vom zweiten Kolben betätigbaren zweiten Ventil (Eiulaßveutil) versehen ist, und das erste Ventil einen in eine Drosselöffnung verschiebbaren zylindrischen Drosselkörper aufweist, dessen Mittelteil gegenüber den beiden Enden einen kleineren Durchmesser aufweist.

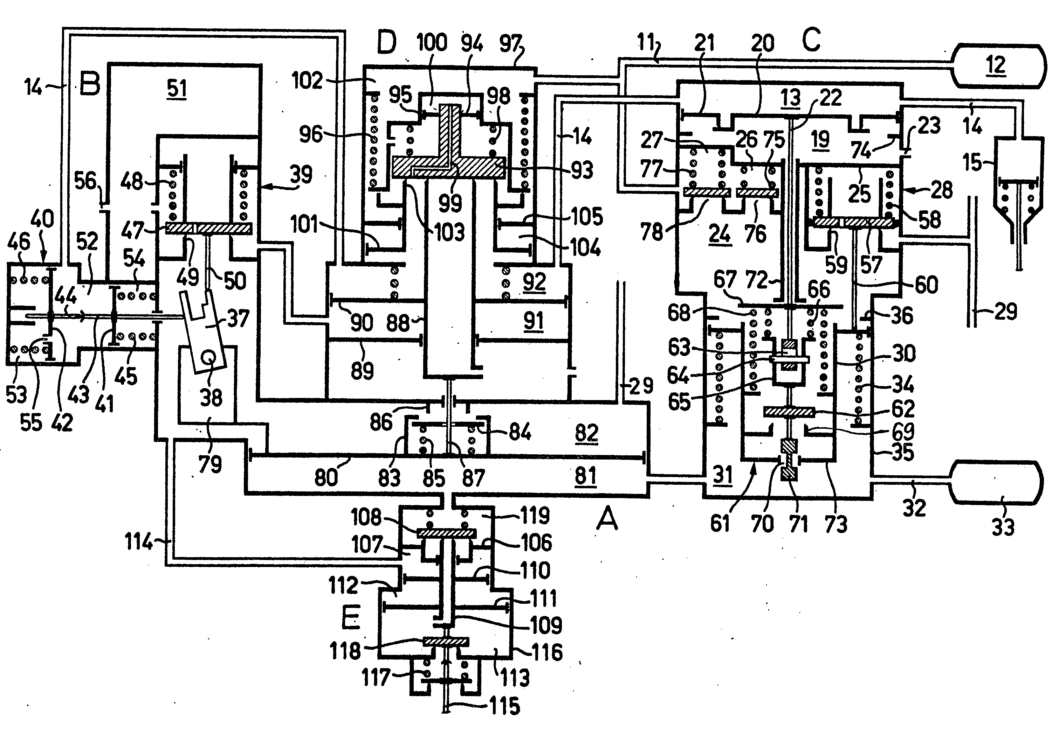

Das in der einzigen Figur der Zeichnung der gestellte Steuerventil weist ein Hauptsteueror-gan A, einen Beschleuniger B, ein Füll- und Abschlussorgan C, einen Höchstdruckbegrenzer D sowie ein Auslöseventil E auf. Das Füll- und Abschlussorgan weist eine erste Kammer 13 auf, welche über eine Leitung 14 mit einem Bremszylinder 15 verbunden ist. Diese Kammer 13 ist von einer zweiten Kammer 19 durch einen zweiteiligen ersteu Kolben 20, 21 getrennt. Der scheibenförmige innere Teil 20 ist an einer Kolbenstange 22 befestigt. Der ringförmige äussere Teil 21 stützt sich auf dem inneren Teil 20 ab und wird durch den Druck in der Kammer 13 gegen den inneren Teil 20 angepresst. Die zweite Kammer 19 ist durch eine Oeffnung 23 ständig mit der Amosphäre verbunden. Eine nicht dargestellte Membrane, die sich auf dem zweiteiligen ersteu Kolben 20, 21 abstützt, verhindert, dass bei einer Relativbewegung der beiden Kolbenteile 20 und 21 zueinander Druckluft aus Kammer 13 in Kammer 19 fliessen kann. Die zweite Kammer 19 ist von einer dritten Kammer 24 durch eine Trenn-wand 25 begrenzt. Die dritte Kammer 24 ist über zwei Rückschlagventile 26 and 27 und über eine Leitung 11 mit einem Hilfsluftbehälter 12 verbunden. Ferner ist die dritte Kammer 24 über ein Einlassventil 28 mit einer Hauptluftleitung 29 verbunden. Die dritte Kammer 24 ist durch einen zweiten Kolben 30 von einer vierten Kammer 31 abgegrenzt. Die vierte Kammer 31 ist über eine Leitung 32 mit einem Steuerluftbehälter 33 verbunden. Eine Feder 34, welche sich einerseits am zweiten Kolben 30 und andersiets am Gehäuse 35 des Füll- und Abschlussorganes abstützt, hat das Bestreben, den zweiten Kolben 30 gegen einen Anshlag 36 des Gehäuses 35 zu drücken. Die Feder 34 ist so dimensioniert, dass sie sich bei einer Druckdifferenz zwischen der dritten und vierten Kam-mer 24 und 31 von 0,2 var verschieben lässt. Der Beschleuniger B, Gegenstand der europäischen Patentanmeldung 78 200 126.7 (Oerlikon-Bührle) und vom vorliegenden Patentschutzbegehren ausgeschlossen, weist einen Kolben 79 auf, an dem ein gabelförmiger Betätigungshebel 37 um eine Achse 38 schwenkbar befestigt ist. Der eine Arm des gabelförmigen Betätigungshebels 37 wirkt mit einem Beschleunigungsventil 39 zusammen. Am anderen Arm des gabelförmigen Betätigungshebels 37 stützt sich ein Verriegelungsorgan 40 ab. Dieses Verriegelungsorgan 40 weist einen kleinen Kolben 41 und einen grossen Kolben 42 auf. Am kleinen Kolben 41 ist eine Kolbenstange 43 befestigt, dessen eines Ende sich am erwähnten Arm des Betätigungshebels 37 abstützt und dessen aderes Ende sich an einer Kolbenstange 44 des grossen Kolbens 42 abstützen kann. Eine erste Feder 45, die sich einerseits am kleinen Kolben 41 und anderseits am Gehäuse des Verriegelungsorgans 40 abstützt, hat das Bestreben, den kleinen Kolben 41 vom Betätigungshebel 37 weg mit der Kolbenstange 43 gegen die Kolbenstange 44 zu drücken. Eine zweite Feder 46, die sich einerseits am grossen Kolben 42 und anderseits am Gehäuse des Verriegelungsorgans 40 abstützt, hat das Bestreben, den grossen Kolben 42 mit der Kolbenstange 44 gegen die Kolbenstange 43 des kleinen Kolbens 41 zu drücken, wodurch dieser gegen den Betätigungshebel 37 gedrückt wird.

Durch die beiden Kolben 41 und 42 wird das Gehäuse des Verriegelungsorganes 40 in drei Kammern 52, 53 und 54 unterteilt. Die mittlere, zwischen den beiden Kolben 41 und 42 befindliche Kammer 52 ist über Leitung 14 mit dem Bremszylinder verbunden. Die durch den grossen Kilben 42 abgegrenzte Kammer 53 ist über eine Drossel 55 im Kolben 42 mit der mittleren Kammer 52 verbunden, und die durch den kleinen Kolben 41 abgegrenzte Kammer ist durch eine nicht dargestellte Oeffnung mit der Atmosphäre verbunden.

Das Beschleunigungsventil 39 weist einen Ventilteller 47 auf, der durch eine Feder 48 gegen einen Ventilsitz 49 gedrückt wird. Am Ventilteller 47 ist ein Stössel 50 befestigt, der sich auf dem Betätigungshebel 37 abstützen kann. Das geöffnete Beschleunigungsventil 39 verbindet die Kammer 82 des Dreidrucksteuerventiles mit einer Beschleunigungskammer 51, welche über eine Drossel 56 mit der Atmosphäre verbunden ist. Das Beschleunigungsventil 39 ist vollständig im Gleichgewicht, d.h. dass die Drücke zu beiden Seiten des Ventiltellers 47 immer gleich gross sind und immer an gleich grossen Flächen angreifen, derart, dass zum Oeffnen des Ventiles 39 nur die Kraft der Feder 48 zu überwinden ist.

Das Einlassventil 28 ist ähnlich aufgebaut wie das soeben beschriebene Beschleunigungsventil 39. Ein Ventilteller 57 wird durch eine Feder 58 gegen einen Ventilsitz 59 im Gehäuse gedrückt. Am Ventilteller 57 ist ein Vetilstössel 60 befestigt, der sich auf dem zweiten Kolben 30 abstützen kann. Das geöffnete Einlassventil verbindet die Hauptluftleitung 29 mit der dritten Kammer 24 des Füllund Abschlussorganes. Auch das Einlassventil 28 ist vollständig im Gleichgewicht, d.h. dass die Drücke zu beiden Seiten des Ventiltellers 57 immer gleich gross sind und immer an gleich grossen Flächen angreifen, derart, dass zum Oeffnen des Einlassventiles 28 nur die Kraft der Feder 58 zu überwinden ist.

Schliesslich ist im zweiten Kolben 30 noch ein weiteres Ventil 61 angeordnet, das einen Ventilteller 62 aufweist de verschiebbar an der Kolbenstange 22 befestigt ist. Zu diesem Zweck ist am unteren Ende der Kolbenstange 22 ein Langloch 63 vorhanden, durch das ein Stift 64 ragt, der an einer Hülse 65 befestigt ist, die ihrerseits starr mit dem Ventilteller 62 verbunden ist. Eine Feder 66, welche sich einerseits an einem Anschlag 67 der Kolbenstange 22 und anderseits an der Hülse 65 abstützt, hat das Bestreben, den an der Hülse 65 befestigten Stift 64 gegen das untere Ende des Langloches 63 zu stossen. Eine weitere Feder 68, welche sich einerseits im Anschlag 67 ker Kolbenstange 22 und anderseits am zwieten Kolben 30 abstützt, ermöglicht eine gewisse Relativbewegung zwischen dem ersten Kolben 20 und dem zweiten Kolben 30. Der erwähnte Ventilteller 62 kann daher mit einem *Ventilsitz* 69 am zweiten Kolben 30 zusammenwirken. Unterhalb des Ventilsitzes 69 ist am zweiten Kolben 30 noch eine Drosselöffnung 70 vorhanden, die auch als Empfindlichkeitsöffnung bezeichnet wird. Diese Drosselöffnung 70 arbeitet mit einem Drosselkörper 71 zusammen, der am Ventilteller 62 befestigt ist. Dieser Drosselkörper 71 ist — wie aus der Zeichnung ersichtlich ist — so ausgebildet, dass in der gezeigten Mittelstellung der Durchlassquerschnitt zwischen Drosselkörper 71 und Drosselöffnung 70 am grössten ist. Bei einer Relativbewegung zwischen Drosselkörper 71 und Drosselöffnung 70, in der einen oder anderen Richtung, wird dieser Durchlassquerschnitt kleiner.

Eine an der Trennwand 25 befestigte Hülse 72 wirkt mit dem Anschlag 67 der Kolbenstange 22 zusammen und begrenzt den Hub der Kolbenstange 22 nach oben. Eine am zweiten Kolben 30 befestigte Hülse 73 wirkt ebenfalls mit dem Anschlag 67 zusammen und ermöglicht, dass der in Kammer 13 auf den ersteu Kolben 20 ausgeübte Druck über die Kolbenstange 22 auf den zweiten Kolben 30 übertragen werden kann. Der Hub des ringförmigen Teiles 21 des ersten Kolbens 20, 21 ist nach unten durch einen Anschlag 74 des Gehäuses 35 begrenzt.

Die erwähnten beiden Rückschlagventile 26 und 27, welche in ihrer geöffneten Stellung die Kammer 24 mit dem Hilfsluftbehälter 12 verbinden, unterscheiden sich dadurch, dass das Rückschlagventil 27 eine relativ starke Feder 77 und eine grosse Durchlassöffnung 78 aufweist, während das Rückschlagventil 26 eine relativ schwache Feder 75 und eine kleine Durchlassöffnung 76 besitzt.

Das Hauptsteuerorgan A weist einen Höchstdruckbegrenzer D auf und ist mit einem Auslöseorgan E verbunden. Das Hauptsteuerorgan besitzt einen Steuerkolben 80, der eine untere Kammer 81 von einer oberen Kammer 82 abgrenzt. Die untere Kammer 81 ist über Kammer 31 und Leitung 32 mit dem Steuerluftbehälter 33 verbunden, und die obere Kammer 82 ist mit der Hauptluftleitung 29 verbunden. Am Steuerkolben 80 ist eine Hülse 83 befestigt, an der eine ringförmige Scheibe 84 unter der Kraft einer Feder 85 anliegt. Die Scheibe 84 wirkt mit einem ortsfesten Anschlag 86 zusammen. Am Steuerkolben 80 ist über eine Stange 87 ein hohler Stössel 88 befestigt. Der Stössel 88 ragt durch eine Trennwand 89 hindurch und weist einen Kolben 90 auf, der eine Kammer 91 von einer Kammer 92 abgrenzt. Die Kammer 91 ist bei geöffnetem Beschleunigungsventil 39 über Kammer 82 mit der Hauptluftleitung 29 verbunden. Die Kammer 92 ist über Leitung 14 und Kammer 13 des Füll- und Abschlussorganes C mit dem Bremszylinder 15 verbunden.

Der Höchstdruckbegrenzer D weist einen Ventilteller 93 auf, an dem ein Kolben 94 befestigt ist. Der Ventilteller 93 mit dem Kolben 94 ist verschiebbar in einer topfförmigen Hülse 95 angeordnet. Eine Feder 96, die sich einerseits am Gehäuse 97 und anderseits an der Hülse 95 abstützt, hat das Bestreben, die Hülse 95 nach unten zu drücken und eine Feder 98, die sich einerseits an der Hülse 95 und anderseits an dem Ventilteller 93 abstützt, hat das Bestreben, den Ventilteller 93 gegen den Stössel 88 zu drücken. Eine Borung 99 im Ventilteller 92 verbindet die Kammer 92 mit einer Kammer 100 zwischen dem Kolben 94 und der topfförmigen Hülse 95. Ein hülsenförmiger Kolben 101 grenzt die erwähnte Kammer 92 von einer Kammer 104 a, die mit der Atmosphäre verbunden ist. Eine Trennwand 105, die am Gehäuse 97 befestigt ist, grenzt die Kammer 104 von einer weiteren Kammer 102 ab, die über Leitung 11 mit dem Hilfsluftbehälter 12 verbunden ist. Der hülsenförmige Teil des Kolbens 101 bildet einen Ventilsitz 103, der mit dem Ventilteller 93 zusammen wirkt.

Das Auslöseventil E dient zur Entlüftung der Kammer 81 und des Steuerluftbehälters 33 und weist eine oberste Kammer 119 auf, die mit der untersten Kammer 81 des Hauptsteuerorgans A verbunden ist. Die Kammer 119 ist durch eine Trennwand 106 von einer weiteren Kammer 107 getrennt. Die Trennwand 106 bildet zugleich einen Ventilsitz für einen Ventilteller 108. Ein Stössel 109, der zur Betätigung des Ventiltellers 108 dient, verbindet einen kleinen Kolben 110 mit einem grossen Kolben 111. Der kleine Kolben 110 grenzt die erwähnte Kammer 107 von einer Kammer 112 ab, die mit der Atmosphäre verbunden ist, und der grosse Kolben 111 grenzt die Kammer 112 von einer untersten Kammer 113 ab, welche über den hohlen Stössel 109 bei abgehobenem Ventilteller 108 mit der Kammer 119 verbunden ist. Die mittlere Kammer 107 ist über eine Leitung 114 mit der Kammer 82 des Hauptsteuerorgans A verbunden. Ein Auslösehebel 115 ist schwenkbar im Gehäuse 116 des Auslöseventiles E gelagert und durch eine Feder 117 in seiner untersten Stellung gehalten. Der Auslösehebel 115 dient zur Betätigung des Stössels 109, der an seinem unteren Ende einen Ventilteller 118 aufweist, der die Kammer 113 gegenüber der Atmosphäre abschliesst.

Die Wirkungsweise des beschriebenen Füll- und Abschlussorganes ist wie folgt.

### 1. *Das Auffüllen der Behälter*

Wenn die Hauptluftleitung 29 der Hilfsluftbehälter 12 und der Steuerluftbehälter 33 drucklos sind, dann hält die Feder 34 den zweiten Kolben 30 in seiner obersten Stellung, und das Einlassventil 28 ist offen, da die Feder 58 des Einlassventiles 28 wesentlich schwächer ist als die erwähnt Feder 34. Während des Auffüllvorganges bleibt der Bremszylinder 15 drucklos, d.h. auch in der Kammer 13 herrscht kein Druck. Die Feder 68 ist somit in der Lage, den ersteu Kolben 20 zusammen mit dem Ringkolben 21 in seiner obersten Stellung zu halten. Der Anschlag 67 leigt somit an der Hülse 72 an. Die Feder 66 drückt die Hülse 65 mit dem Ventilteller 62 nach unten, bis der Stift 64 am unteren Ende des Langloches 63 anliegt. Das Ventil 61 ist offen, da der Ventilteller 62 nicht auf dem Ventilsitz 69 aufliegt und der Drosselkörper 71 nimmt gegenüber der Drosselöffnung eine Mittelstellung ein, in welcher der Durchlassquerschnitt am grössten ist.

Sobald der Druck in der Hauptluftleitung 29 und somit in der dritten Kammer 24 ansteigt, kann sich der Hilfsluftbehälter 12 zuerst über das eine Rückschlagventil 26 mit der schwachen Feder 75 langsam auffüllen und bei wachsendem Druck auch über das andere Rückschlagventil 27 mit dem grösseren Durchlassquerschnitt 78. Gleichzeitig kann sich auch der Steuerluftbehälter 33 über das vollständig geöffnete Ventil 61 langsam auffüllen.

Der Druck in der dritten Kammer 24 wächst somit schneller als in der vierten Kammer 31. Sobald die Druckdifferenz in den beiden Kammern 24 und 31 genügend gross ist, um die Kraft der Feder 34 zu überwinden, senkt sich der zweite Kolben 30, das Einlassventil 28 schliesst sich, und der Durchlassquerschnitt zwischen Drosselöffnung 70 und Drosselkörper 71 verkleinert sich. Bei geschlossenem Einlassventil 28 wird der Druck in der Kammer 24 absinken, da einerseits ein Teil der Luft durch die Rückschlagventile 26 und 27 weiter in den Steuerbehälter 12 fliesst und gleichzeitig ein Teil der Luft durch den verengten Durchlassquerschnitt zwischen Oeffnung 70 und Körper 71 in die unterste Kammer 31 und den Steuerbehälter 33 fliesst. Die Druckdifferenz in den Kammern 31 und 24 wird somit verschwinden, und die Feder 34 ist somit wieder in der Lage, den zweiten Kolben 30 in seine oberste Stellung anzuheben, wodurch das Einlassventil 28 wieder geöffnet wird und wieder Druckluft aus der Hauptluftleitung 29 in die Kammer 24 strömt. Der beschriebene Vorgang wird sich wiederholen, bis sich der Hilfsluftbehälter 12 und der Steuerluftbehälter 33 auf den in der Hauptluftleitung herrschenden Betriebsdruck von z.B. 5 bar aufgefüllt haben. Dieses stufenweise Auffüllen der beiden Behälter 12 und 33 ermöglicht es, in einem langen Zug mit vielen Wagen alle Hilfsluftbehälter 12 gleichmässig aufzufüllen. Sobald alle Be-hälter gefüllt sind, ist die Bremse betriebsbereit.

### 2. *Der Bremsvorgang*

Zum Bremsen muss de Druck in der Hauptluftleitung 29 und somit auch in der Kammer 24 gesenkt werden. Dies hat zunächst keine Folgen, da der zweite Kolben 30 unter der Kraft der Feder 34 bereits in seiner obersten Stellung ist. Di Rückschlagventile 26 und 27 verhindern, dass Druckluft aus dem Hilfsluftbehälter 12 in die Kammer 24 und in die Hauptluftleitung 29 zurückfliesst. Es kann allerdings etwas Druckluft aus dem Steuerbehälter 33 und der Kammer 31 in die Kammer 24 durch das Ventil 61 zwischen Drosselöffnung 70 und Drosselkörper 71 hindurchfliessen. Dies wird jedoch sofort verhindert, sobald der Druck im Bremszylinder 15 und somit in der Kammer 13 anwächst. Da in der Kammer 13 unterhalb der Kolben 20 und 21 Atmosphärendruck herrscht, werden die Kolben 20, 21 sofort nach unten bewegt, bis der Ringkolben 21 am Anschlag 74 anliegt. Dies hat zur Folge, dass sich das Ventil 61 teilweise schliesst, d.h. der Ventilteller 62 kommt noch nicht auf den Ventilsitz 69 zu liegen, aber der Durchlassquerschnitt zwischen Drosselöffnung 70 und Drosselkörper 71 wird wesentlich verkleinert. Sobald jedoch der Druck im Bremszylinder 15 und in der Kammer 13 soweit angestiegen ist, dass dieser Druck ausreicht, den ersteu Kolben 20 allein gegen die Kraft der Feder 68 nach unten zu verschieben, dann wird das Ventil 61 vollständig geschlossen, indem der Ventilteller 62 auf den Ventilsitz 69 zu liegen kommt. Wächst der Druck im Bremszylinder 15 und in der Kammer 13 noch wieter an, so wird die Feder 68 so weit zusammengedrück, dass der Anschlag 67 sich auf der Hülse 73 abstützt, und somit der zweite Kolben 30 entgegen der Kraft der Feder 34 gesenkt wird. Während des weiteren Bremsvorganges bleibt somit das Ventil 61 geschlossen, und das ganze dargestellte Füll- and Abschlussventil ist von drei Drücken, nämlich vom Druck in der Hauptluftleitung 29, vom Druck im Steuerbehälter 33 und vom Druck im Bremszylinder 15 abhängig.

Zusammenfassend sind beim Bremsen somit drei Phasen zu unterscheiden.

a) Bei kleinem Druck im Bremszylinder wird Ventil 61 teilweise geschlossen.

b) Bei mittlerem Druck im Bremszylinder wird Ventil 61 vollständig geschlossen.

c) Bei grösserem Druck im Bremszylinder verschiebt der obere erste Kolben 20 den unteren zweiten Kolben 30.

### 3. *Der Lösevorgang*

Zum Lösen der Bremse muss der Druck in der Fauptluftleitung 29 und somit auch in der Kammer 24 vergrössert werden, wodurch die Bremse gelöst und der Druck im Bremszylinder 15 und somit in der ersten Kammer 13 gesenkt wird. Das Senken des Druckes in der Kammer 13 bewirkt ein Anheben des ersten Kolbens 20, wodurch auch der Drosselkörper 71 gegenüber der Drosselöffnung 70 angehoben wird, so dass der Durchlassquerschnitt des Ventiles 61 verkleinert wird. Dies ist besonders von Bedeutung, wenn die Bremse mit Füllstössen gelöst wird, um ein Ueberladen des Steuerbehälters 33 zu verhindern. Erst wen der Druck im Bremszylinder 15 so klein geworden ist, dass die Feder 68 in der Lage ist, die Kolben 20 und 21 anzuheben, wird der Drosselkörper 71 gegenüber der Drosselöffnung in die Mittelstellung bewegt und das Ventil 61 wieder vollständig geöffnet.- Falls jetzt in der Hauptluftleitung 29 durch Füllstösse der Druck stark erhöht wird, steigt auch der Druck in der Kammer 24, und der zweite Kolben 30 wird entgegen der Kraft der Feder 34 und entgegen dem in der Kammer 31 herrschenden Steuerdruck nach unten bewegt, wodurch zuerst der Durchlassquerschnitt zwischen Drosselöffnung 70 und Drosselkörper 71 verkleinert wird, und anschliessend das Einlassventil 28 geschlossen wird. Dadurch wird ein Ueberladen des Steuerbehälters zuverlässig vermieden.

### 4. *Die Unerschöpfbarkeit der Bremse*

Durch die Anordnung von zwei parallelen Rückschlagventilen 26 und 27, von denen das eine Rückschlagventil 27 eine starke Feder 77 und einen grossen Durchlassquerschnitt 78 aufweist und das andere Rückschlagventil 26 eine schwache Feder 75 und einen kleinen Durchlassquerschnitt 76 wird erreicht, dass die Druckluft anfänglich schnell in den Hilfsluftbehälter einströmen kann, bei kleiner Druckdifferenz jedoch nur noch langsam, wodurch der Druck im Hilfsluftbehälter 12 bei raschem Druckanstieg in der Hauptluftlietung 29 hinter dem Druck in der Hauptluftleitung zurückbleibt. Dadurch wird eine Erschöpfung der Bremse vermieden.

### Patentansprüche

1. Dreidrucksteuerventil an einer indirekt wirkenden Druckluftbremse,
— mit einem Füll- und Abschlussorgan (C) enthaltend:
    — einen ersten federbelasteten Kolben (20, 21), der einerseits vom Bremszylinderdruck un andererseits vom Atmosphärendruck belastet ist,
    — einen zweiten federbelasteten Kolben (30), der einerseits vom Steuerbehälterdruck und anderseits vom Hauptluftleitungsdruck belastet ist.
    — eine Kolbenstange (22), die einerseits am ersten Kolben (20) und andererseits an einem Ventilteller (62) befestigt ist, der zusammen mit einem Ventilsitz (69) am zweiten Kolben (30) ein erstes Ventil (61) zum Füllen des Steuerbehälters (33) bildet,
    — einen Anschlag (67) an der Kolbenstange (22) zur Uebertragung des Bremszylinderdruckes auf den zweiten Kolben (30),
dadurch gekennzeichnet, dass
— das Füll- und Abschlussorgan (C) mit einem vom zweiten Kolben (30) betätigbaren zweiten Ventil (Einlaßventil 28) versehen ist, und
— das erste Ventil (61) einen in eine Drosselöffnung (70) verschiebbaren zylindrischen Drosselkörper (71) aufweist, dessen Mittelteil gegenüber den beiden Enden einen kleineren Durchmesser aufweist.

2. Dreidrucksteuerventil nach Anspruch 1, dadurch gekennzeichnet, dass im Füll- und Abschlussventil (C) zwischen dem Einlassventil (28) und der zum Hilfsluftbehälter (12) führenden Leitung (11) zwei Rückschlagventile (26 und 27) parallel zueinander angeordnet sind, von denen das eine Rückschlagventil (27) einen grösseren Durchlassquerschnitt (78) und eine stärkere Feder (77) und das andere Rückschlagventil (26) einen kleineren Durchlassquerschnitt (76) und eine schwächere Feder (75) aufweist.

**Revendications**

1. Soupape de commande à trois pressions associée à un frein à air comprimé à action indirecte, soupape de commande comportant un organe de remplissage et de fermeture (C) qui contient:
— un premier piston (20, 21) sollicité par un ressort et qui est soumis sur une face à la pression du cylindre de frein et sur l'autre face à la pression atmosphérique,
— un second piston (3) sollicité par un ressort et qui est soumis sur une face à la pression du réservoir de commande et sur l'autre face à la pression de la canalisation d'air principale,
— une tige de piston (22) fixée d'un côté au premier piston (20) et de l'autre côté à un disque de soupape (62) ce disque de soupape, conjointement avec un siège de soupape (69) sur le second piston (30), constituant une première soupape (61) pour le remplissage du réservoir de commande (33),
— une butée (67) sur la tige de piston (22) pour la transmission de la pression du cylindre de frein sur le second piston (30),
soupape de commande caractérisée en ce que:
— l'organe de remplissage et de fermeture (C) est équipé d'une seconde soupape (soupape d'admission 28) susceptible d'être actionnée par le second piston (30), et
— la première soupape (61) comporte une structure cylindrique d'étranglement (71) susceptible de se déplacer dans un orifice d'étranglement (70), la partie médiane de cette structure comportant un diamètre plus petit que les deux extrémités de la structure.

2. Soupape de commande à trois pressions selon la revendication 1, caractérisée en ce que, dans la soupape de remplissage et de fermeture (C), entre la soupape d'admission (28) et la canalisation (11) aboutissant au réservoir d'air auxiliaire (12), sont disposées deux soupapes de retunue (26 et 27) parallèlement l'une à l'autre, l'une (27) de ces soupapes de retenue comportant une section transversale de passage (78) plus grande et un ressort (77) plus puissant, tandis que l'autre soupape de retenue (26) comporte une section transversale de passage (76) plus petite et un ressort (75) moins puissant.

**Claims**

1. Three-pressure control valve for use on an indirectly acting compressed air brake comprising:
— a filling and isolating element (C) comprising
— a first spring-loaded piston (20, 21) which is loaded on one side by the brake cylinder pressure and on the other side by atmospheric pressure;
— a second spring-loaded piston (30) which is loaded on one side by the control cylinder pressure and on the other side by the pressure in the main air line;
— a piston rod (22) which on one side is fixed to the first piston (20) and on the other side to a valve disc (62) which together with a valve seat (69) on the second piston (3) forms a first valve (61) for filling the control cylinder (33);
— a stop (67) fitted to the piston rod (22) in order to transmit the brake cylinder pressure to the second piston (30);
characterised in that
— the filling isolating element (C) having a second valve (28) which can be actuated by the second piston (30);
— the first valve has a cylindrical throttle body (71), which protrudes into a throttle orifice (70) and can be displaced relative to the throttle orifice and the central part of which has a similar diameter than the two ends.

2. Three-pressure control valve according to claim 1, wherein in the filling and isolating element (C) between the second valve (28) and the line (11) leading to the auxiliary air cylinder (12), there are two non-return valves (26 and 27) in a mutually parallel arrangement, one non-return valve (27) having a larger throat cross-section (78) and a stronger spring (77) and the other non-return valve (26) having a smaller throat cross-section (76) and a weaker spring (75).

0 001 130